# EUROPEAN PATENT APPLICATION

(11) **EP 1 918 336 A1**
(43) Date of publication of application: **07.05.2008**
(21) Application number: 06123287.2
(22) Date of filing: 31.10.2006
(51) Int. Cl.: C09D 7/12

(54) **Coating composition comprising gemstone particles**

(71) Applicant: Akzo Nobel Coatings International B.V., 6824 BM Arnhem (NL)
(72) Inventor: Jans, Robertus Jozef Franciscus, 1161 VZ Zwanenburg (NL)
(74) Representative: Schalkwijk, Pieter Cornelis

(57) **Abstract**

Coating composition comprising one or more binders, a carrier vehicle, and gemstone powder particles, characterized in that the gem powder particles are dispersed in the carrier vehicle and the content of gem powder particles is below 4% by weight of the total composition.

## Description

The present invention relates to a coating composition comprising a binder, a carrier, such as a solvent or an aqueous carrier, and gem powder particles. Gem or diamond particles can be added to coatings to improve mechanical properties like scratch resistance, as is disclosed for instance in US 2005/0249939. This publication discloses coatings, for instance based on air drying alkyds or acrylic dispersions, comprising diamond powder particles which are dispersed in the resin. This requires an additional step in the manufacturing process.

Another problem encountered with the incorporation of diamond particles in paints is the effect it has on the paint film appearance. Due to the light scattering effect of diamond powder particles, a high content of such particles typically results in reduced saturation of the paint film colour. In transparent lacquers, the diamond particles tend to reduce transparency.

The object of the invention is to provide a coating composition comprising diamond particles which can be manufactured more easily while maintaining an acceptable balance of mechanical properties and colour saturation or transparency.

The object of the invention is achieved by a coating composition comprising less than 4% by weight of gem powder particles, e.g. diamond particles, dispersed in the carrier vehicle. Although the diamond particles are not embedded in the resin, it was found that the effect on the paint film colour remains sufficiently low while an acceptable level of hardness and scratch resistance is still maintained. Dispersing the particles into the vehicle can be achieved by simply stirring in, so that no additional dispersing step is required anymore.

Although diamond or adamant particles are preferred for their hardness, powdered particles of other types of gemstone powders can also be used additionally or alternatively. Suitable examples are sapphire, ruby, emerald, amethyst, opal, topaz, jade, lapis lazuli, garnet, tourmaline, amethyst or mixtures thereof.

The gem or diamond powder particles can for example have an average particle size of at least about 5 nm, e.g. at least 50 nm. The average particle size can be below 200 nm, e.g., below 100 nm. Optionally, the used powder particles may show a bimodal or multimodal particle size distribution. For example, the particles can comprise a mixture of particles one portion of which has an average particle size of 10 microns or less while another portion has an average particle size of 15 microns or more.

The shape or morphology of the particles can vary depending on the types of diamond particles selected. Generally, spherical particles can be used, as can particles that are platy, cubic or acicular (that is, elongated or fibrous). The particles can also have a random or non-uniform morphology.

The coating composition comprises at least one binder, which can be an organic binder or an inorganic binder or mixtures thereof. Suitable organic binder systems are, for example, oxidatively drying polymers, ambient temperature cure epoxy-amines, physically drying acrylics or polyester binders or mixtures thereof. Suitable inorganic binders are for example polysiloxanes, calcium sulfates, such as gypsum, water glass, hydraulic binders or cementitious binders such as aluminate cement or Portland cement or mixtures thereof. The inorganic binders can be provided in powder form. In that case, a dry powder composition comprising one or more inorganic binders in powder form and one or more gem powders can be used to prepare the coating composition of the present invention.

Oxidatively drying polymers are polymers which crosslink on exposure to oxygen from air by virtue of containing unsaturated fatty acid residues. Alkyds are typical examples of such polymers. Alkyd paints cure under the influence of oxygen, via oxidative crosslinking of unsaturated fatty acid building blocks. Alkyd resins can be prepared from fatty acids, polycarboxylic acids, and di- or polyvalent hydroxyl compounds. Mono- and polyunsaturated fatty acids can be used, such as, e.g., lauroleic acid, myristoleic acid, palmitoleic acid, oleic acid, or ricinolinic acid; bi-unsaturated fatty acids, such as linoleic acid; triunsaturated acids, such as linolenic acid, eleostearic acid, and licanic acid; and other unsaturated fatty acids obtained from animal or vegetable oils. Optionally, saturated fatty acids may also be used, such as lauric acid, myristic acid, palmitic acid, or stearic acid. Other suitable monocarboxylic acids include tetrahydrobenzoic acid and hydrogenated or non-hydrogenated abietic acid. Examples of polycarboxylic acids include phthalic acid, isophthalic acid, terephthalic acid, trimellitic acid, succinic acid, adipic acid, azelaic acid, dimerized fatty acids, cyclopentane-1,2-dicarboxylic acid, cyclohexane-1,2-dicarboxylic acid, 4-methylcyclohexane-1,2-dicarboxylic acid, tetrahydrophthalic acid, cyclohexane-1,2,4,5-tetracarboxylic acid, and butane-1,2,3,4-tetracarboxylic acid. If so desired, the carboxylic acids may be used as anhydrides or in the form of an ester, e.g., an ester of an alcohol having 1-4 carbon atoms. In addition, the alkyd resin comprises di- or polyvalent hydroxyl compounds. Examples of suitable divalent hydroxyl compounds are ethylene glycol, 1,3-propane diol, 1,6-hexane diol, 1,12-dodecane diol, 3-methyl-1,5-pentane diol, 2,2,4-trimethyl-1,6-hexane diol, 2,2-dimethyl-1,3-propane diol, and 2-methyl-2-cyclohexyl-1,3-propane diol. Examples of suitable triols are glycerol, trimethylol ethane, and trimethylol propane. Suitable polyols having more than 3 hydroxyl groups are pentaerythritol, sorbitol, and etherification products of the compounds in question, such as ditrimethylol propane and di-, tri-, and tetrapentaerythritol. The alkyd resins can for example be obtained by direct esterification of the components, with the option of a portion of these components having been converted already into ester diols or polyester diols. Alternatively, the unsaturated fatty acids can be added in the form of a drying oil, such as sunflower oil, linseed oil, tuna fish oil, dehydrated castor oil, coconut oil, and dehydrated coconut oil. Transesterification with the other added acids and diols will then give the final alkyd resin.

Optionally, the alkyd resins may be styrenated and/or acrylated by grafting vinyl-functional building blocks to the olefinically unsaturated groups in the fatty acid residues. Solvent borne examples of vinyl modified alkyds are for instance described in WO 2005/116154. Water borne examples of such vinyl-modified examples are disclosed in WO 01/40336.

Further examples of oxidatively drying polymers are polyurethanes comprising fatty acid residues. Such a polyurethane may be prepared by reacting polyisocyanate(s) with isocyanate-reactive compound(s) by methods well-known in the prior art. Preferably, an isocyanate-terminated polyurethane prepolymer is first formed, which is chain extended with an active hydrogencontaining compound. If the polymer is made in such manner, the unsaturated fatty acid residue(s) bearing compound is introduced into the polyurethane backbone during the prepolymer formation and/or during the chain extension step. Alternatively, a polyurethane may be made by capping an isocyanate-terminated polyurethane with monofunctional isocyanate-reactive compounds or by using an excess of compounds having isocyanate-reactive groups during polymer preparation, or a combination of the above preparations may be used. Monomers bearing non-ionic or ionic water-dispersing or emulsifier groups can be included in the prepolymer formation to provide the facility of selfdispersibility in water. Preferred isocyanate-reactive compounds bearing unsaturated fatty acid residue(s) which may be used in the urethane synthesis may be obtained from the reaction, using techniques known in the art, of a suitable fatty acid with a hydroxyl- or amine-functional compound to provide a fatty acid residue-bearing compound with at least one (preferably at least two) hydroxyl- or amine isocyanate-reactive groups. Suitable fatty acids include fatty acids derived from castor oil, soybean oil, sunflower oil, tallow oil, linseed oil, and fatty acids such as linoleic acid, palmitoleic acid, linolenic acid, oleic acid, oleosteric acid, licanic acid, arachidonic acid, ricinoleic acid and/or mixtures thereof. Suitable polyisocyanates include aliphatic, cycloaliphatic, araliphatic and/or aromatic polyisocyanates. Examples of suitable polyisocyanates include ethylene diisocyanate, 1-6-hexamethylene diisocyanate, isophorone diisocyanate, cyclohexane-1,4-diisocyanate, 4,4'-dicyclohexylmethane diisocyanate, p-xylylene diisocyanate, tetramethylxylene diisocyanate, 1,4-phenylene diisocyanate, 2-4-toluene diisocyanate, 2,6- toluene diisocyanate, 4,4'-diphenylmethane diisocyanate, polymethylene polyphenylpolyisocyanates 2,4'-diphenylmethane diisocyanate, 3(4)- isocyanatomethyl-1-methyl cyclohexyl isocyanate, and 1,5-naphthylene diisocyanate. Mixtures of polyisocyanates can be used and also polyisocyanates which have been modified by the introduction of urethane, allophanate, urea, biuret, carbodiimide, uretonimine, uretdion or isocyanurate residues.

The coating composition can also be formulated as a latex paint, based on an aqueous polyvinyl emulsion. The water-insoluble binder can for example be an acrylic (co)polymer, vinyl acetate polymer, styrene/acrylic copolymer, ethylene/vinyl acetate copolymer, ethylene/vinyl chloride copolymer, and the like, or mixtures thereof.

The coating composition according to the present invention can also be formulated as a floor finish, e.g. for wooden floors. Typical binder systems for such applications are for example polyurethane acrylate copolymers or hybrids, e.g., in aqueous dispersion, optionally crosslinkable with carbonyl- hydrazine chemistry.

The carrier vehicle can be water or it can comprise one or more organic solvents. Suitable solvents include esters, for example n-butyl acetate, ethyl acetate, and isobutyl acetate; ether alcohols, such as ethylene glycol monoethyl ether, ethylene glycol monobutyl ether, propylene glycol monomethyl ether, dipropylene glycol monoethyl ether, propylene glycol monoethylether acetate, ethylene glycol monoethylether acetate, dipropylene glycol monoethylether acetate, and diethylene glycol monoethylether acetate; ketones, such as methyl ethyl ketone, methyl n-butyl ketone, and methyl isobutyl ketone; lower alkanols containing 2 to 4 carbon atoms, such as ethanol, propanol, isopropanol, and butanol; and aromatic hydrocarbons, such as xylene, toluene, and naphtha. In solvent borne systems, water can be used in a water-in-oil emulsion as a filler. In water borne systems, co-solvents can be used, such as glycols.

The coating composition according to the present invention can be formulated as a clear varnish, e.g. for wooden substrates such as floors. Optionally, the varnish may comprise transparent pigments, such as transparent iron oxides. Alternatively, the coating composition can be an opaque paint or lacquer comprising opacifying pigments, such as titanium dioxide, zinc oxide, leaded zinc oxide, titanium calcium, and optionally tinting pigments, such as carbon black, yellow oxides, brown oxides, tan oxides, raw and burnt sienna or umber, chromium oxide green, phthalocyanine green, phthalonitrile blue, ultramarine blue, cadmium pigments or chromium pigments. Filler pigments or extenders may also be added, such as clay, silica, talc, mica, woolastonite, and the like.

The coating compositions of the present invention can contain additives such as plasticizers, antioxidants, light stabilizers, UV absorbers, thixotropic agents, anti-gassing agents, organic cosolvents, biocides, surfactants, flow control additives, catalysts, photoinitiators, and/or photosensitizers where appropriate.

The diamond powder particles can be introduced into the coating composition by mixing an aqueous slurry or paste of the gem powder particles, in particular of diamond powder particles, into the carrier vehicle before or after the addition of the other constituents. It was found that this helps to prevent agglomeration of the diamond particles in both solvent borne and water borne compositions. The paste can be substantially free of adjuvants like dispersants or surfactants. In this respect, "substantially free of" means that the content is too low to have a statistically meaningful effect on the dispersibility of the diamond powders in the slurry.

The coating compositions of the invention can be applied to any of a variety of substrates including, e.g., metallic, polymeric, wooden, ceramic, concrete, and glass substrates. For example, the coating compositions can be formulated as wall paints, floor finishes, or trim paints, e.g., for windows, doors, or window and door frames, joint fillers, tile adhesives, flooring screeds, leveling compounds, floor adhesives, tile adhesives, and the like.

The coating compositions according to the present invention can for instance be applied by brush or roller application.

The invention is further illustrated by the following examples. In these examples reference is made to the following tests.
- Gloss: tested with a Byk MicroTRl-gloss measurement on opacity charts
- Burnishing: tested by rubbing rounds for 1 minute with a cotton based textile
- Hardness: König pendulum hardness tested in accordance with DIN 53157 /EN ISO 1522
- Taber Abraser: tested in accordance with DIN 68861 - 2 (1981), two-layer application on a wooden substrate
- Sedimentation: visual evaluation after 6 weeks storage at 25°C
- Transparency: tested by measuring colour differences on black and white opacity charts in accordance with ISO 2814.

### Examples

A coating composition was prepared comprising a polyurethane acrylate binder in an aqueous dispersion, commercially available as Neopac^{®} E106 from DSM Neoresins. An aqueous slurry comprising 200 mg of diamond powder was added to 1 litre of the coating composition. The composition was then stirred for a few minutes until the mixture had become homogeneous.

The coating composition was applied twice on a wooden substrate in a dry film thickness of 200 micrometers and 300 micrometers, respectively.

Test results are shown in the following Table 1.

**Table 1**

| | | |
|---|---|---|
| Layer thickness | 200 µm | 300 µm |

| ***Transparency*** | | |
|---|---|---|
| Y / black | 1.57 | 1.6 |
| Y / white | 70 | 69.7 |
| Contrast ratio | 2.24 | 2.30 |

| ***Gloss*** | | |
|---|---|---|
| gloss @60° | 15 | 17 |
| gloss @85° | 44 | 46 |
| gloss @60° after rubbing | 16 | 17 |
| gloss @85° after rubbing | 52 | 52 |

| ***Burnishing*** | | |
|---|---|---|
| burnishing in % @60° | 6.67 | 0.00 |
| burnishing in % @85° | 18.18 | 13.04 |
| burnishing abs. @60° | 1.00 | 0.00 |
| burnishing abs. @85° | 8.00 | 6.00 |

| ***Pendulum hardness* (*König*) *on glass*** | | |
|---|---|---|
| after 1 day | | |
| after 2 days | 66 | 52 |
| after 7 days | 71 | 60 |
| after 14 days | 80 | 80 |

Sedimentation or syneresis was not observed.

Three samples of the prepared coating composition were applied on a wooden substrate to evaluate the rubbing resistance. The results are given in Table 2.

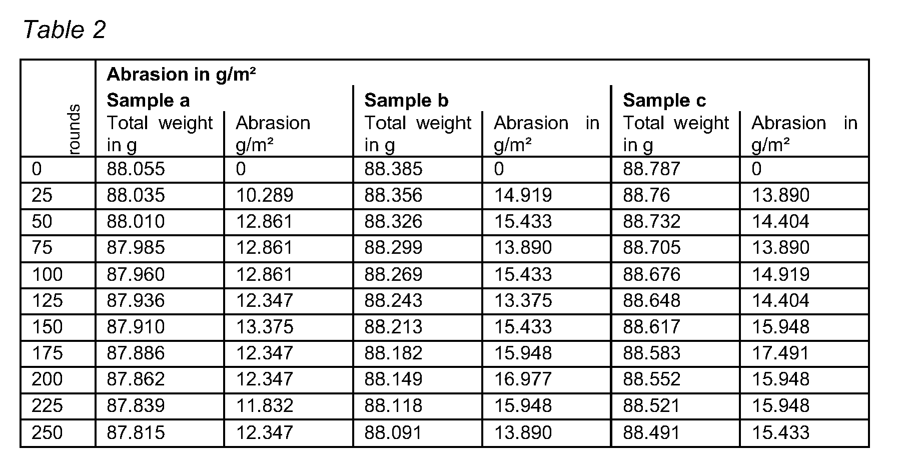

## Claims

1. Coating composition comprising one or more binders, a carrier vehicle, and gemstone powder particles, **characterized in that** the gem powder particles are dispersed in the carrier vehicle and the content of gem powder particles is below 4% by weight of the total composition.

2. Coating composition according to claim 1, **characterized in that** the gemstone powder is diamond powder.

3. Coating composition according to claim 1 or 2, **characterized in that** the content of the gemstone powder particles is 5 carats or less, e.g. 2 carats or less per litre of the coating composition.

4. Coating composition according to claim 1, 2, or 3, **characterized in that** the carrier vehicle is water, optionally with co-solvents.

5. Coating composition according to any one of the preceding claims, **characterized in that** the carrier vehicle comprises one or more organic solvents.

6. Coating composition according to any one of the preceding claims, **characterized in that** the binder comprises one or more oxidatively drying alkyds.

7. Coating composition according to any one of the preceding claims, **characterized in that** the binder comprises one or more inorganic binders selected from the group of polysiloxanes, water glass, gypsum, and cement.

8. Coating composition according to claim 4, **characterized in that** the binder comprises one or more emulsified polyvinyl polymers.

9. Dry powder composition to prepare a coating composition according to claim 1 comprising one or more inorganic binders in powder form and one or more gem powders.

10. Use of a coating composition according to any one of the preceding claims for the application of one or more layers of a floor finish.

11. Method of preparing a coating composition by mixing one or more binders with a carrier vehicle and optionally pigments and/or additives, **characterized in that** an aqueous slurry of gemstone powder particles is mixed into the carrier vehicle before or after the addition of the other constituents.
